## Europäisches Patentamt

## European Patent Office

## Office européen des brevets

(11) Veröffentlichungsnummer: **0 028 393**
**B1**

(12) **EUROPÄISCHE PATENTSCHRIFT**

(45) Veröffentlichungstag der Patentschrift:
08.08.84

(21) Anmeldenummer: 80106642.4

(22) Anmeldetag: 29.10.80

(51) Int. Cl.³: **B 60 B 3/06**, B 60 B 3/04, B 60 B 5/02, B 60 B 23/00

(54) Kraftfahrzeugrad.

(30) Priorität: 31.10.79 DE 2944013
10.01.80 DE 3000767

(43) Veröffentlichungstag der Anmeldung:
13.05.81 Patentblatt 81/19

(45) Bekanntmachung des Hinweises auf die Patenterteilung:
08.08.84 Patentblatt 84/32

(84) Benannte Vertragsstaaten:
AT BE CH DE FR GB IT LI LU NL SE

(56) Entgegenhaltungen:
DE - B - 1 283 109
FR - A - 1 189 762
FR - A - 1 258 729
GB - A - 754 725
GB - A - 939 195
GB - A - 1 380 267
US - A - 1 377 634
US - A - 3 417 456
US - A - 3 431 625
US - A - 3 484 137

(73) Patentinhaber: Stahlschmidt & Maiworm GmbH & Co.KG, In der Lacke, D-5980 Werdohl 1 (DE)

(72) Erfinder: Stahlschmidt, Erich, Wiesenfeldstrasse 10, D-5974 Herscheid (DE)

(74) Vertreter: Seibert, Rudolf, Dipl.-Ing., Tattenbachstrasse 9, D-8000 München 22 (DE)

BUNDESDRUCKEREI BERLIN

## Beschreibung

Die Erfindung bezieht sich auf ein Kraftfahrzeugrad, und zwar insbesondere auf ein besonders leichtes Rad, sogenanntes Leichtmetallrad.

Es ist bekannt, die Räder von Kraftfahrzeugen aus Leichtmetall zu fertigen um das Gewicht des Rades möglichst gering zu halten. Ein geringes Radgewicht garantiert eine besonders gute Bodenhaftung, da das Rad den Unebenheiten in der Straße selbst bei höchsten Geschwindigkeiten einwandfrei folgen kann.

Für die Fertigung derartiger Leichtmetallräder sind verschiedene Herstellverfahren bekannt. Hierbei kommt dem Gießen von Leichtmetallrädern eine besondere Bedeutung zu, da hierdurch selbst große Stückzahlen mit einem vernünftigen Aufwand hergestellt werden können.

Es ist aber auch bekannt, derartige Leichtmetallräder zu schmieden. Dabei können noch geringere Materialquerschnitte bei gleicher Festigkeit eingehalten werden, was sich günstig auf das Gewicht auswirkt.

Umgekehrt ist das Schmieden aber verhältnismäßig kostenintensiv, so daß ein breiter Einsatz an hohen Kosten scheitert.

Es ist weiter durch die US-A-3 484 137 bekannt Kraftfahrzeugräder zweiteilig aufzubauen, und zwar aus einem Felgenring und einer Radschüssel, die getrennt gefertigt werden. Dabei ist bei der bekannten Ausführungsform der Felgenring aus Stahl gefertigt, während die Radschüssel aus einem Nichteisenmetall, vorwiegend Aluminium besteht. Der Felgenring ist bei der vorbekannten Ausführung im Preßsitz auf die Radschüssel aufgezogen und die beiden Teile sind stellenweise gegen Verdrehung durch am Felgenring angeordnete Bohrungen der Radschüssel reichende Noppen gesichert.

Nachteilig an einem derart aufgebauten Kraftfahrzeugrad ist, daß alle Kräfte, und dabei insbesondere die parallel zur Achse auftretenden Kräfte, also die während des Gebrauches beim Kurvenfahren auftretenden sehr erheblichen Kräfte von den stellenweise aufgeschweißten Noppen aufgenommen werden müssen, was eine besondere Sorgfalt und besonders ausgedehnte Schweißstellen auf der Innenseite des Felgenringes erfordert. Durch ausgeprägte Schweißverbindungen wird aber der Felgenring in diesen Bereichen geschwächt, was ggf. eine Überdimensionierung zumindest in diesen Bereichen notwendig macht. Eine unmittelbare Schweißverbindung ist dabei nicht möglich.

Aufgabe der Erfindung ist es, ein aus Felgenring und Radschüssel zusammengesetztes Kraftfahrzeugrad anzugeben, das durch die besondere Formgebung der Bauteile eine einwandfreie Übertragung aller Kräfte ohne Beanspruchung einzelner Schweißverbindungen garantiert und bei dem Radschüssel und Felgenring aus dem gleichen Material, vornehmlich Aluminium, bestehen können.

Diese Aufgabe wird mit einem Kraftfahrzeugrad mit den Merkmalen des Patentanspruches 1 gelöst.

Bei dem Kraftfahrzeugrad nach der Erfindung, das wie das vorbekannte Rad zweiteilig aufgebaut ist, ist also der Radschüsselaußenring und der Felgeninnenring im Berührungsbereich uneben mit miteinander korrespondierenden Umfangsnuten und Stegen versehen, so daß nach einem Aufziehen des Felgenringes im Preßsitz auf die Radschüssel auch alle achsparallelen Kräfte voll von Radschüssel auf Felgenring und umgekehrt übertragen werden können. Die zusätzlich anzubringenden Schweißpunkte zwischen Felgenring und Radschüssel brauchen dann nur den Überschuß an gegenseitigen Verdrehungskräften aufzunehmen, also den Preßsitz zusätzlich zu sichern. Auf diese Weise gelingt es, ein Leichtmetallrad zu fertigen, das bei gleicher Größe und Festigkeit bis zu 30% weniger Gewicht aufweist als ein im ganzen gegossenes Rad.

Durch die GB-A 754 725 ist zwar ein aus Teilen gefertigtes Kraftfahrzeugrad bekanntgeworden, bei welchem die einzelnen einander berührenden Bereiche von Felgenring und einer speziell geformten Radschüssel miteinander kongruierende, konkave und konvexe Oberflächen haben, um ein Verspannen der Radschüssel zu ermöglichen. Ein Aufschrumpfen von Felgenring auf die Radschüssel ist bei einer derartigen Ausbildung nicht möglich.

Ein Kraftfahrzeugrad nach der Erfindung kann einfach dadurch hergestellt werden, daß der Felgenring aus einem Aluminiumblech tiefgezogen wird, wobei die Stärke des Aluminiumringes gerade so gewählt ist, daß die für ein Kraftfahrzeugrad benötigte Steifigkeit im Bereich des Felgenringes erreicht ist. Der so tiefgezogene Felgenring wird an der Innenfläche, welche der Radschüssel zugewandt ist, uneben, d. h. mit mindestens einer Erhöhung oder Vertiefung, versehen, und zwar vorzugsweise über den ganzen Umfang.

Die entsprechend hergestellte Radschüssel, die in diesem Fall beispielsweise auch gegossen sein kann, trägt an ihrem äußeren Umfang eine komplementäre Form und ist im Durchmesser so gehalten, daß Erhöhungen im Felgenring den gleichen Durchmesser haben wie Vertiefungen im Außenring der Radschüssel bzw. Vertiefungen im Felgeninnenring den gleichen Durchmesser aufweisen wie Überhöhungen am Radschüsselaußenring.

Nach Fertigung dieser beiden Teile wird der Felgenring relativ zur Radschüssel stark erhitzt, vorzugsweise auf eine Temperatur, die 200° bis 300° C über der der Radschüssel liegt, und auf die Radschüssel aufgezogen und durch Abkühlen aufgeschrumpft. Schon hierdurch wird ein sehr guter Preßsitz erreicht, der für die Übertragung der normalen Kräfte, die bei einem Kraftfahrzeugrad sowohl radial als auch axial auftreten, voll ausreicht.

Zusätzlich zu dem Aufschrumpfen wird aber, um ein einwandfreies Rad zu erhalten, Felgenring und Radschüssel zumindest stellenweise miteinander verschweißt. Dies kann beispielsweise dadurch erfolgen, daß über den Umfang der einander zugewandten Stirnflächen von Felgenring und Radschüssel eine Raunaht aus einzelnen Punktschweißungen angebracht wird, die dann die zusätzliche Festigkeit auch für höchste Beanspruchung garantiert.

Vorteilhafte Weiterbildungen und zusätzliche Maßnahmen sind Gegenstand der Unteransprüche.

So kann es sich beispielsweise, insbesondere bei Radtypen, die sehr hohe Brems- oder Beschleunigungsmomente übertragen müssen, empfehlen, über den Umfang verteilt zwischen Felgenring und Radschüssel Mitnahmekörper, z. B. Kugeln mit einzupressen, die dann jegliche Drehbewegung von Radschüssel auf Felgenring und umgekehrt sicher mitübertragen.

Für geringere Kraftübertragungen genügt es jedoch in praktisch allen Fällen gemäß dem Patentanspruch 3 beim Aufschrumpfen von Felgenring auf die Radschüssel in den Verbindungsbereich ein Karborundpulver einzufügen, das die Reibung ausreichend erhöht.

Weitere Merkmale und deren Vorteile ergeben sich aus der folgenden Beschreibung von Ausführungsbeispielen in Verbindung mit der Zeichnung. In der Zeichnung zeigt

Fig. 1 eine Teilschnittdarstellung eines Felgenringes mit Radschüssel,

Fig. 2 einen Schnitt in der Darstellung nach Fig. 1 längs der Linie II-II,

Fig. 3 eine abgewandelte Ausführungsform in Teilschnittdarstellung,

Fig. 4 eine weitere mögliche Ausgestaltung des Verbindungsbereiches zwischen Radschüssel und Felgenring,

Fig. 5 eine teilweise Schnittdarstellung eines abgewandelten Rades vor der Verformung.

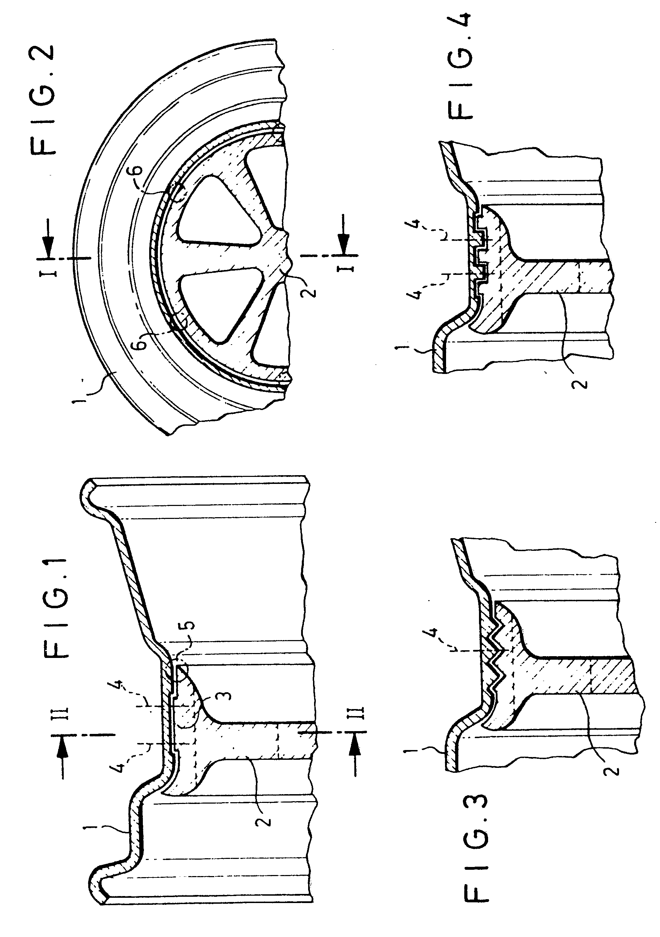

In den Figuren ist mit 1 jeweils der Felgenring bezeichnet, der beispielsweise im Tiefziehverfahren aus Aluminiumblech gefertigt sein kann. Die Stärke des Aluminiumbleches ist hierbei optimal bemessen, d. h. das Blech ist gerade so dick, wie es die Festigkeit des entsprechenden Rades erfordert. Dieser Felgenring 1 wird, wie vorstehend beschrieben, auf eine Radschüssel 2 aufgeschrumpft. Im Verbindungsbereich zwischen dem Außenring der Radschüssel 2 und der Innenfläche des Felgenringes 1 sind hierbei Unebenheiten, die nach dem Aufschrumpfen garantieren, daß eine seitliche Verschiebung des Felgenringes 1 relativ zur Radschüssel 2 unmöglich wird. Bei dem Ausführungsbeispiel nach Fig. 1 ist hierbei auf dem Außenring der Radschüssel ein einziger, entsprechend breiter Steg 3 angeordnet, der in eine entsprechende Nut im Felgenring 1 eingreift.

Bei der Ausführungsform nach Fig. 3 sind Radschüssel 3 und Felgenring 1 ineinander verzahnt. Die Fig. 4 zeigt, daß auch eine stufenförmige Verzahnung mit Vorteil im Rahmen der Erfindung möglich ist.

Es sei an dieser Stelle darauf hingewiesen, daß auch beliebige andere Ineinandergreifungen möglich sind, sofern sie nur geeignet sind, Axialkräfte, die ein Verschieben zwischen Felgenring und Radschüssel verursachen könnten, zu verhindern.

Es sei auch darauf hingewiesen, daß die Darstellung aus Anschaulichkeitsgründen stark vergrößert gewählt ist. Die Gesamttiefe der Verzahnung beträgt jeweils je nach der angewandten Aufschrumpftemperatur 0,7 bis 1,5 mm. Diese Werte genügen aber, um die Axialkräfte voll aufzunehmen und von einem Teil auf den anderen zu übertragen.

Zusätzlich zu der Aufschrumpfung, die, wie schon dargelegt, einen ausreichend guten Sitz garantiert, sind noch ein oder mehrere Schweißverbindungen vorgesehen, und zwar entweder gleichmäßig als Ring über den gesamten Umfang oder aber auch in Form einzelner punktweiser Verbindungen. Die Schweißverbindung kann beispielsweise, wie in den Fig. 1, 3 und 4 durch gestrichelte Linien 4 angezeigt, im unmittelbaren Umfangsbereich vorgenommen werden. Hierbei empfiehlt es sich, wie beispielsweise aus Fig. 3 oder 4 zu ersehen, die Schweißverbindung, die durch aufeinanderfolgendes Punktschweißen über den ganzen Umfang laufen kann, an den Stellen vorzusehen, an denen die Radfelge den größten Querschnitt hat, da hierdurch sich eine mögliche Schwächung des Materials, selbst wenn sie auftreten sollte, sich nicht nachteilig auswirken kann.

Es ist aber auch möglich, die Schweißverbindung am Innenrand, wie durch den Kreis 5 in Fig. 1 angezeigt, anzubringen. Die Fig. 2 zeigt noch, daß es im Rahmen der Erfindung vorteilhaft sein kann, über den Umfang verteilte Drehsicherungskörper 6 beispielsweise in Form von einzelnen Kugeln einzudrücken, da hierdurch die Übertragung der Tangentialkräfte zusätzlich verbessert wird.

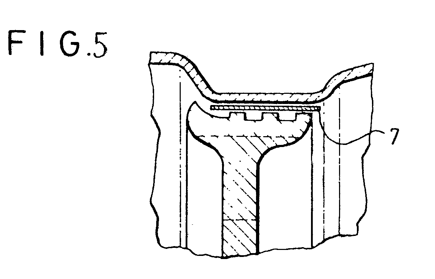

Um die Haftung zwischen Felgenring und Radschüssel noch zu vergrößern, kann es gemäß einer vorteilhaften Weiterbildung des Erfindungsgedankens zweckmäßig sein, eine Folie, insbesondere eine Metallfolie aus einem weicheren Material, zwischen die beiden Teile vor der Verformung einzubringen, wie dies anschaulich in der Fig. 5 gezeigt ist. Dort ist die entsprechende, vorzugsweise aus Zinn oder Blei bzw. einer Legierung dieser Metalle bestehende Folie mit 7 bezeichnet.

Bei einer anderen Weiterbildung des Erfindungsgedankens ist es möglich, die Radschüssel aus einem hochbeanspruchbaren Kunststoff, z. B. faserverstärktem Kunststoff zu fertigen, wodurch eine weitere Gewichtsverminderung ermöglicht wird. Als faserverstärkter Kunststoff kommt hierbei vorzugsweise Karbonfieber in Frage.

## Patentansprüche

1. Kraftfahrzeugrad, insbesondere Leichtmetallrad, bestehend aus Felgenring (1) und Radschüssel (2), die im Berührungsbereich korrespondierende Zylinderflächen aufweisen und der Felgenring im Preßsitz auf die Radschüssel aufgezogen und die Bauteile stellenweise miteinander verbunden sind, dadurch gekennzeichnet, daß Felgenring (1) und Radschüssel (2) im Berührungsbereich miteinander korrespondierende Umfangsnuten und Stege aufweisen und daß Felgenring und Radschüssel zusätzlich zumindest stellenweise (punktweise) miteinander verschweißt sind.

2. Rad nach Anspruch 1, dadurch gekennzeichnet, daß zur Verdrehungssicherung der Radschüssel relativ zum Felgenring Mitnahmekörper (6), z. B. Kugeln, über den Umfang verteilt zwischen Felgenring und Radschüssel eingefügt sind.

3. Rad nach Anspruch 1, dadurch gekennzeichnet, daß zwischen Felgenring und Radschüssel ein Carborundpulver eingefügt ist.

4. Rad nach Anspruch 1, dadurch gekennzeichnet, daß die ggf. zu einer fortlaufenden Naht sich ergänzenden Schweißpunkte (4) im Bereich des Preßsitzes zwischen Felgenring und Radschüssel angeordnet sind.

5. Rad nach Anspruch 1, dadurch gekennzeichnet, daß die Berührungskante zwischen Felgenring und Radschüssel an der Innenseite (5) des Rades verschweißt ist.

6. Rad nach einem der Ansprüche 1 bis 6, dadurch gekennzeichnet, daß die Radschüssel aus einem hochbeanspruchbaren Kunststoff, vorzugsweise einem (Glas-)Faser verstärktem Kunststoff wie z. B. karbonfieber verstärktem Kunststoff gefertigt ist.

7. Rad nach Anspruch 1, dadurch gekennzeichnet, daß die Radschüssel am Außenumfang uneben ausgebildet ist, während der Felgenring eine der Radschüssel zugewandte glatte Oberfläche aufweist.

8. Rad nach einem der Ansprüche 1 bis 7, dadurch gekennzeichnet, daß zwischen dem äußeren Rand der Radschüssel (2) und dem Innenrand des Felgenringes (1) eine Folie (7) aus einem weichen Material, vorzugsweise Zinn und/oder Blei bzw. aus einer Legierung dieser Stoffe eingefügt ist.

## Claims

1. A motor vehicle wheel, in particular a light metal wheel, consisting of a rim ring (1) and a wheel dish (2) which have corresponding cylindrical surfaces in the region of contact and the rim ring is mounted on the wheel dish as a press-fit and the components are connected together in places, characterised in that the rim ring (1) and wheel dish (2) have mutually corresponding circumferential grooves in the region of contact, and that the rim ring and wheel dish are welded to one another at least in places (pointwise).

2. A wheel according to claim 1, characterised in that in order to secure the wheel dish against rotation relative to the rim ring, catch bodies (6), e. g. balls, are inserted between the rim ring and wheel dish, distributed along the circumference.

3. A wheel according to claim 1, characterised in that a carborundum powder is introduced between the rim ring and whell dish.

4. A wheel according to claim 1, characterised in that the welding points (4) which, if necessary, supplement one another to form a continuous seam, are arranged in the region of the press-fit between the rim ring and wheel dish.

5. A wheel according to claim 1, characterised in that the contact edge between the rim ring and wheel dish is welded at the inner side (5) of the wheel.

6. A wheel according to one of claims 1 to 6, characterised in that the wheel dish is produced from a synthetic resin which can be highly stressed, preferably a (glass) fibre-reinforced synthetic resin such as, for example, a carbon fibre-reinforced synthetic resin.

7. A wheel according to claim 1, characterised in that at the outer periphery, the wheel dish is uneven, whilst the rim ring has a smooth surface facing the wheel dish.

8. A wheel according to one of claims 1 to 7, characterised in that, between the outer edge of the wheel dish (2) and the inner edge of the rim ring (1), a foil (7) is inserted made of soft material, preferably tin and/or lead, or of an alloy of these materials.

## Revendications

1. Roue pour véhicule automobile, en particulier roue en un métal léger, constituée par l'anneau de jante (1) et le voile de roue (2) qui comportent, dans la zone de contact des surfaces cylindriques correspondantes, alors que l'anneau de jante est monté à ajustement serré sur le voile de roue et que les éléments constitutifs sont reliés, par endroits, entre eux, caractérisée par le fait que l'anneau de jante (1) et le voile de roue (2) comportent dans la zone de contact des gorges périphériques et des nervures qui se correspondent et que l'anneau de jante et le voile de roue sont, de plus, soudés entre eux au moins par endroits (de façon punctiforme).

2. Rou selon la revendication 1, caractérisée par le fait que pour assurer l'absence de rotation relative de l'anneau de jante par rapport au voile de roue, des corps d'entraînement (6), par exemple des billes sont insérés entre l'anneau de jante et le voile de roue, avec une répartition périphérique.

3. Roue selon la revendication 1, caractérisée par le fait qu'une poudre de carborundum est introduite entre l'anneau de jante et le voile de roue.

4. Roue selon la revendication 1, caractérisée par le fait que les points de soudure (4) qui peuvent éventuellement se compléter pour former un cordon continu, sont disposés dans la zone d'ajustement serré entre l'anneau de jante et le voile de roue.

5. Roue selon la revendication 1, caractérisée par le fait que le rebord de contact entre l'anneau de jante et le voile de roue est soudé sur le côté extérieur (5) de la roue.

6. Roue selon l'une des revendications 1 à 6, caractérisée par le fait que l'anneau de jante est fabriqué avec une matière plastique résistant à des contraintes élevées, de préférence avec une matière plastique renforcée par des fibres (de verre), telle que par exemple une matière plastique à renforcement par des fibres de carbone.

7. Roue selon la revendication 1, caractérisée par le fait que l'anneau de jante est réalisé avec une périphérie extérieure rugueuse, alors que le voile de roue possède, du côté de l'anneau de jante, une suface lisse.

8. Roue selon l'une des revendications 1 à 7, caractérisée par le fait qu'entre le bord extérieur du voile de roue (2) et le bord intérieur de l'anneau de jante (1), est inserrée une feuille (7) en un matériau mou, de préférence l'étain et/ou le plomb, ou en un alliage de ces matières.

FIG.1

FIG.2

FIG.3

FIG.4

F I G .5

7